# EUROPÄISCHE PATENTSCHRIFT

(11) **EP 1 075 401 B1**
(45) Veröffentlichungstag und Bekanntmachung des Hinweises auf die Patenterteilung: **10.11.2004**
(21) Anmeldenummer: 00914036.9
(22) Anmeldetag: 23.02.2000
(51) Int. Cl.: B60S 1/24, F16C 11/06

(54) **GELENK ZUM VERBINDEN VON DREI HEBELN**
JOINT FOR CONNECTING THREE LEVERS
ARTICULATION POUR LA LIAISON DE TROIS LEVIERS

(30) Priorität: 08.03.1999 DE 19910094
(43) Veröffentlichungstag der Anmeldung: 14.02.2001
(73) Patentinhaber: ROBERT BOSCH GMBH, 70442 Stuttgart (DE)
(72) Erfinder: KUEHBAUCH, Gerd, D-77830 Bühlertal (DE)
(86) Internationale Anmeldenummer: PCT/DE2000/000501
(87) Internationale Veröffentlichungsnummer: WO 2000/053467

(56) Entgegenhaltungen:
- EP-B- 0 683 739
- FR-A- 2 222 893
- FR-A- 2 505 952
- US-A- 5 473 955

## Beschreibung

### Stand der Technik

Die Erfindung geht aus von einem Gelenk zum Verbinden von drei Hebeln nach dem Oberbegriff des Anspruchs 1.

Wischeranlagen für Kraftfahrzeuge besitzen als Antrieb einen Wischermotor und ein daran angebautes Getriebe, dessen Abtriebswelle in der Regel über eine Kurbel und Gelenkstangen eine Kurbel antreibt, die mit einer Antriebswelle für jeden Scheibenwischer fest verbunden ist.

Bei herkömmlichen Wischeranlagen ist eine Kurbel fest an der Abtriebswelle des Getriebes angebaut und hat an ihrem anderen Ende mindestens einen Abtrieb. Dieser Abtrieb bildet ein Gelenk, das mehrere Hebel eines Hebelgetriebes miteinander verbindet.

Aus der EP 0 683 739 B1 ist ein gattungsgemässes Gelenk mit einer Kurbel bekannt, die an einem Lagerbolzen befestigt ist, so daß eine mechanische Einheit besteht. Der Lagerbolzen ragt mit seinem Bolzenschaft durch die Kurbel, während er in seinem von der Kurbel abgewandten Endbereich in einen kugelförmigen Bolzenkopf übergeht. Dieser ist in einem ersten Lagerring gelagert, der mit einer ersten Antriebsstange verbunden ist. Die innere Lagerfläche des ersten Lagerrings ist entsprechend der kugeligen Oberfläche des Bolzenkopfs gekrümmt, um zum einen eine Schwenkbewegung der ersten Antriebsstange gegenüber dem Bolzenkopf zuzulassen und zum anderen gegenüber Axialkräften gesichert zu sein. Der erste Lagerring besitzt weiterhin eine kugelige Außenfläche, die als Lagerfläche für einen zweiten Lagerring dient. Dieser umschließt den ersten Lagerring vollständig und ist mit einer zweiten Antriebsstange durch Vergießen unlösbar verbunden. Die einander zugeordneten Lagerflächen der Lagerringe sind konkav bzw. konvex gerundet und konzentrisch zum Mittelpunkt des Bolzenkopfs ausgerichtet. Sie ermöglichen somit auch eine zumindest begrenzte Schwenkbewegung der Antriebsstangen und der Kurbel zueinander. Die beiden Antriebsstangen und die Kurbel greifen an den Lagerelementen in unterschiedlich großen Abständen an, so daß das Gelenk und die Antriebsstangen sowie die Kurbel im Bereich des Gelenks durch erhebliche Biegemomente belastet werden. Außerdem baut das Gelenk relativ hoch. Um die Antriebsstangen des Hebelgetriebes im wesentlichen in einer Ebene anordnen zu können, müssen sie und gegebenenfalls die Kurbel stark gekröpft werden.

Es sind auch Ausführungsbeispiele bekannt, bei denen die Zuordnungen zwischen Kurbel und Antriebsstangen vertauscht sind. Bei allen Ausführungen sind die Antriebsstangen und die Kurbel in drei Ebenen mit den Lagerteilen verbunden, was ein hohes Gelenk zur Folge hat.

### Vorteile der Erfindung

Nach der Erfindung besteht das Gelenk zum Verbinden von drei Hebeln eines Hebelgetriebes aus einer ersten Lagerschale, an der ein erster Hebel befestigt ist. Die erste Lagerschale besitzt eine Innenfläche, die als Lagerfläche für eine zweite Lagerschale dient. Die zweite Lagerschale besteht aus zwei Sektoren, die mit jeweils einem Hebel fest verbunden sind. Die Sektoren haben Außenflächen, durch die sie in der ersten Lagerschale gelagert und zentriert sind. Nach innen stützen sie sich durch geeignete Lagermittel, z.B. ein Schneidenlager gegeneinander ab.

Zweckmäßigerweise weisen die Lagerschalen kugelförmige Lagerflächen auf, so daß die Hebel um den Kugelmittelpunkt nach allen Seiten zumindest begrenzt schwenkbar sind. Ferner können nach einer weiteren Ausgestaltung der Erfindung die Sektoren der zweiten Lagerschale eine konzentrische Kugelkalotte haben, in die eine Sicherungskugel eingepreßt wird, an der sich die Sektoren gegeneinander abstützen, so daß die mit ihnen verbundenen Hebel nicht nur gegenüber dem dritten Hebel, sondern auch gegeneinander in beliebiger Richtung schwenkbar sind. Die drei Hebel werden nur durch die Außenflächen der Sektoren der zweiten Lagerschalen und die Innenfläche der ersten Lagerschale zueinander zentriert, so daß wegen der wenigen Passungen zwischen den Teilen enge Toleranzen eingehalten werden können.

Der mit der ersten Lagerschale verbundene Hebel erstreckt sich in einer mittleren Querschnittebene der Lagerschalen, während die beiden anderen Hebel auf einer gemeinsamen Ebene liegen, die einen geringen Abstand zu dem ersten Hebel aufweist. Dieser Abstand wird nur von der Höhe der Sektoren und der Höhe der Hebel bestimmt. Das Gelenk baut daher äußerst flach und wird nur durch geringe Biegemomente beansprucht. Nach einer Ausgestaltung der Erfindung sind die Hebel des Gelenks aus Blech gefertigt, wobei der zweite und der dritte Hebel teilweise ein u-förmiges Profil aufweisen. Das u-förmige Profil gibt den Hebeln eine größere Torsions- und Biegefestigkeit und erfordert einen geringeren Materialeinsatz im Vergleich zu Vollprofilen. Die Lagerschalen bestehen aus Kunststoff und sind an die zugeordneten Hebel angespritzt, so daß eine feste, formschlüssige Verbindung entsteht. Das gewählte Profil der Hebel und die stoffschlüssige und gegebenenfalls formschlüssige Verbindung mit den Lagerschalen bewirken eine günstige Kraftübertragung.

Nach einer weiteren Variante der Erfindung besteht das Gelenk aus einer Lagerschale, an der ein erster Hebel befestigt ist. Die Lagerschale besitzt eine kugelförmige Innenfläche, die als Lagerfläche für zwei Sektoren dient, die an die zugeordneten Hebel angeformt sind. Die Sektoren haben kugelförmige Außenflächen und kugelförmige Innenflächen, die wiederum eine Kugel umgreifen. Die Lagerschale besteht zweckmäßigerweise aus Kunststoff und ist an den zugeordneten Hebel angespritzt. Bei dieser Variante wird die zweite Lagerschale in einfacher Weise durch die Sektoren gebildet, die an die aus Blech bestehenden Hebel direkt angeformt sind. Weitere Vorteile ergeben sich aus der folgenden Zeichnungsbeschreibung.

### Zeichnung

In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.
Es zeigen:
- Fig. 1: einen Längsschnitt durch ein erfindungsgemäßes Gelenk,
- Fig. 2: einen Schnitt durch ein Gelenk entsprechend der Linien II-II in Fig. 1 und
- Fig. 3: eine Variante zu Fig. 1.

### Beschreibung der Ausführungsbeispiele

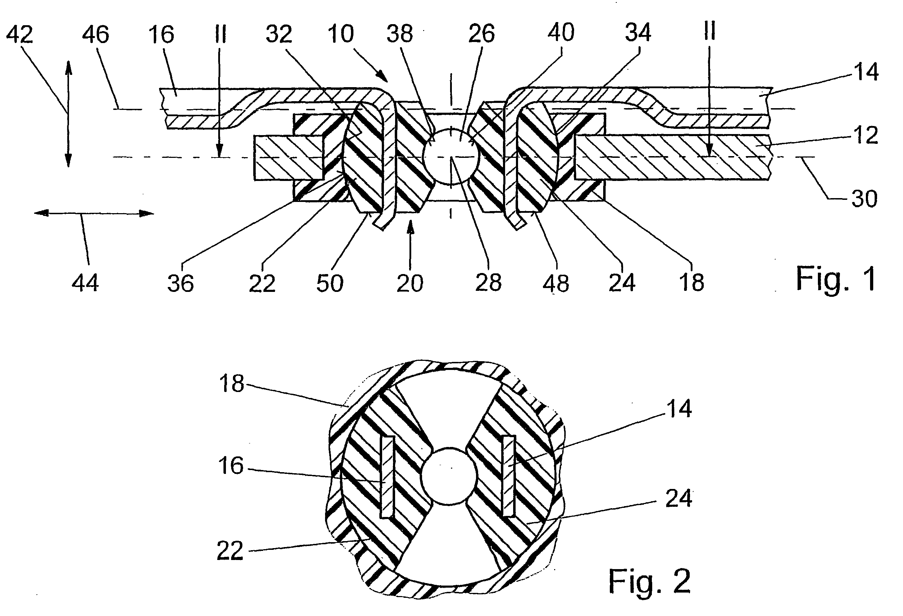

Ein Gelenk 10 nach Fig. 1 besteht aus einer ersten Lagerschale 18, die mit einem ersten Hebel 12 fest verbunden ist, so daß diese Teile eine mechanische Einheit bilden. Die Innenfläche 32 der ersten Lagerschale 18 ist kugelförmig ausgebildet und dient als Lagerfläche für eine zweite Lagerschale 20. Diese besteht aus einem ersten Sektor 22, der mit einem zweiten Hebel 16 fest verbunden ist, und aus einem zweiten Sektor 24, der mit einem dritten Hebel 14 fest verbunden ist. Die Sektoren 22 und 24 besitzen kugelförmige Außenflächen 34 und 36, die an die kugelförmige Innenfläche 32 der Lagerschale 18 so angepaßt sind, daß sie einerseits eine begrenzte Schwenkbewegung der Hebel 14 und 16 um einen gemeinsamen Mittelpunkt 28 zulassen und andererseits das Gelenk 10 gegenüber Axialkräften sichern, die die Hebel 12, 14 und 16 in einer Längsrichtung 42 zu verschieben suchen.

Die Sektoren 22 und 24 besitzen Innenflächen 38 und 40, die die Form einer zentrischen Kugelkalotte bilden. Eine in diese Kugelkalotte eingepreßte Sicherungskugel 26 fixiert und sichert die Bauteile des Gelenks 10. Wenn nur Schwenkbewegungen in einer Ebene erforderlich sind, können anstelle der kugelförmigen Innenflächen 32, 38, 40 und Außenflächen 34, 36 zylindrische Lagerflächen vorgesehen werden.

Der erste Hebel 12 erstreckt sich in einer Längsrichtung 44 in einer mittleren Querschnittebene 30 Sie geht durch den Mittelpunkt der Sicherungskugel 26, den gemeinsamen Mittelpunkt 28. Die beiden anderen Hebel 14 und 16 liegen auf einer gemeinsamen Ebene 46, die sich in einem Abstand in Längsrichtung 42 über der mittleren Querschnittebene 30 befindet.

Die Lagerschale 18 und die Sektoren 22 und 24 der Lagerschale 20 bestehen aus Kunststoff und sind an die zugeordneten Hebel 12, 14 und 16 angespritzt. Die Hebel 12, 14 und 16 bestehen aus Blech, wobei die Hebel 14 und 16 in Längsrichtung 44 teilweise ein u-förmiges Profil besitzen. Die eingespritzten Enden der Hebel 14 und 16 durchdringen die Sektoren 22 und 24 an den Stirnseiten 48 und 50 und sind dort gleichfalls abgewinkelt, wodurch die Verbindung zusätzlich verstärkt wird.

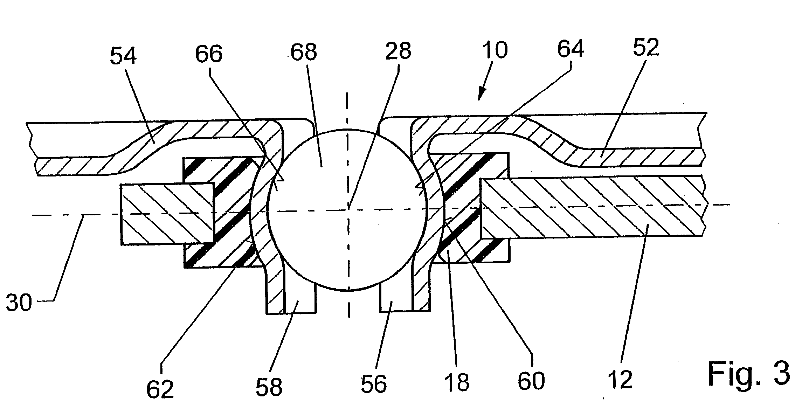

Fig. 3 zeigt eine Variante des Gelenks 10, das aus einer Lagerschale 18 besteht, an der ein erster Hebel 12 befestigt ist. Die Lagerschale 18 besitzt eine kugelförmige Innenfläche 32, die als Lagerfläche für zwei Sektoren 56 und 58 dient, die an die zugeordneten Hebel 52 und 54 aus Blech angeformt sind. Ihre kugelförmigen Außenflächen 60 und 62 sind an die kugelförmige Innenfläche 32 angepaßt und lassen eine begrenzte Schwenkbewegung der Hebel 52 und 54 um den gemeinsamen Mittelpunkt 28 zu. Die kugelförmigen Innenflächen 64 und 66 umgreifen eine Sicherungskugel 68 und sind an ihren Enden geradlinig verlängert. Durch die Verlängerung lassen sich exakte Kugelflächen erzeugen. Die Sicherungskugel 68 fixiert und sichert auch hier die Bauteile des Gelenks 10 in axialer Richtung 42.

Die Anordnung der Hebel 52 und 54 zum Hebel 12 entspricht der ersten Variante. Die Lagerschale 18 besteht aus Kunststoff und ist an den zugeordneten Hebel angespritzt. Bei dieser Variante entfällt eine separate zweite Lagerschale 20, da die Sektoren an die aus Blech bestehenden Hebel direkt angeformt sind.

## Patentansprüche

1. Gelenk (10) zum Verbinden von drei Hebeln (12, 14, 16) eines Hebelgetriebes mit einer ersten Lagerschale (18), an der ein erster Hebel (12) befestigt ist und in der eine zweite Lagerschale (20) drehbar gelagert ist, an der ein zweiter Hebel (14) befestigt ist, **dadurch gekennzeichnet, daß** die zweite Lagerschale (20) zwei Sektoren (22, 24) aufweist, von denen ein erster Sektor (22) mit dem zweiten Hebel (14) und ein zweiter Sektor (24) mit einem dritten Hebel (16) fest verbunden sind, wobei die Sektoren (22, 24) eine begrenzte Schwenkbewegung gegeneinander um den gemeinsamen Mittelpunkt (28) zulassen.

2. Gelenk (10) nach Anspruch 1, **dadurch gekennzeichnet, daß** Lagerschalen (18, 20) kugelförmige Lagerflächen aufweisen.

3. Gelenk (10) nach einem der vorhergehenden Ansprüche, **dadurch gekennzeichnet, daß** die Sektoren (22, 24) der zweiten Lagerschale (20) eine zentrische Kugelkalotte aufweisen, in die eine Sicherungskugel (26) gepreßt ist.

4. Gelenk (10) nach einem der vorhergehenden Ansprüche, **dadurch gekennzeichnet, daß** sich der erste Hebel (12) in einer mittleren Querschnittebene (30) der Lagerschalen (18, 20) erstreckt.

5. Gelenk (10) nach einem der vorhergehenden Ansprüche, **dadurch gekennzeichnet, daß** mindestens eine Lagerschale (18, 20) aus Kunststoff besteht und an dem zugeordneten Hebel (12, 14, 16) angespritzt ist, der aus Blech gefertigt ist.

6. Gelenk (10) nach einem der vorhergehenden Ansprüche, **dadurch gekennzeichnet, daß** der zweite und dritte Hebel (52, 54) aus Blech gefertigt und die Sektoren (56, 58) der zweiten Lagerschale (20) an den Hebeln (52, 54) angeformt sind.

## Claims

1. Joint (10) for the connection of three levers (12, 14, 16) of a lever mechanism, with a first bearing shell (18), to which a first lever (12) is fastened and in which is mounted rotatably a second bearing shell (20) to which a second lever (14) is fastened, **characterized in that** the second bearing shell (20) has two sectors (22, 24), of which a first sector (22) is firmly connected to the second lever (14) and a second sector (24) is firmly connected to a third lever (16), the sectors (22, 24) allowing a limited pivoting movement relative to one another about the common centre point (28).

2. Joint (10) according to Claim 1, **characterized in that** the bearing shells (18, 20) have spherical bearing surfaces.

3. Joint (10) according to one of the preceding claims, **characterized in that** the sectors (22, 24) of the second bearing shell (20) have a centric spherical segment into which a securing sphere (26) is pressed.

4. Joint (10) according to one of the preceding claims, **characterized in that** the first lever (12) extends in a middle cross-sectional plane (30) of the bearing shells (18, 20).

5. Joint (10) according to one of the preceding claims, **characterized in that** at least one bearing shell (18, 20) consists of plastic and is injection-moulded on the associated lever (12, 14, 16) which is manufactured from sheet metal.

6. Joint (10) according to one of the preceding claims, **characterized in that** the second and the third lever (52, 54) are manufactured from sheet metal, and the sectors (56, 58) of the second bearing shell (20) are integrally formed on the levers (52, 54).

## Revendications

1. Articulation (10) pour relier trois leviers (12, 14, 16) d'un mécanisme à leviers, comportant une première coquille de coussinet (18) à laquelle est fixé un premier levier (12) et dans laquelle est montée de façon à pouvoir tourner une deuxième coquille de coussinet (20) à laquelle est fixé un deuxième levier (14),
**caractérisée en ce que**
la deuxième coquille de coussinet (20) présente deux secteurs (22, 24) dont un premier secteur (22) est relié à demeure au deuxième levier (14) et un deuxième secteur (24) est relié à demeure à un troisième levier (16), les secteurs (22, 24) pouvant décrire un mouvement limité de basculement l'un par rapport à l'autre autour du centre commun (28).

2. Articulation (10) selon la revendication 1,
**caractérisée en ce que**
les coquilles de coussinet (18, 20) présentent des surfaces de coussinet sphériques.

3. Articulation (10) selon l'une des revendications précédentes,
**caractérisée en ce que**
les secteurs (22, 24) de la deuxième coquille de coussinet (20) présentent une calotte sphérique centrale dans laquelle est pressée une sphère de maintien (26).

4. Articulation (10) selon l'une des revendications précédentes,
**caractérisée en ce que**
le premier levier (12) s'étend dans un plan moyen de section transversale (30) des coquilles de coussinet (18, 20).

5. Articulation (10) selon l'une des revendications précédentes,
**caractérisée en ce qu'**
au moins une coquille de coussinet (18, 20) est en matière synthétique et moulée par injection sur le levier (12, 14, 16) associé fabriqué en tôle.

6. Articulation (10) selon l'une des revendications précédentes,
**caractérisée en ce que**
le deuxième et le troisième levier (52, 54) sont fabriqués en tôle et les secteurs (56, 58) de la deuxième coquille de coussinet (20) sont façonnés sur les leviers (52, 54).
